# EUROPEAN PATENT APPLICATION

(11) **EP 4 336 939 A1**
(43) Date of publication of application: **13.03.2024**
(21) Application number: 21939702.3
(22) Date of filing: 07.05.2021
(51) Int. Cl.: H04W 72/12, H04L 5/00

(54) **FEEDBACK METHOD, FEEDBACK APPARATUS AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/092219
(87) International publication number: WO 2022/233056

(57) **Abstract**

The present disclosure relates to a feedback method, a feedback apparatus and a storage medium. The feedback method is applied to a terminal, and comprises: receiving downlink control information, wherein the downlink control information is used for indicating common beam information; and determining whether the downlink control information is correctly received, and sending, to a network device, a feedback result for indicating whether the downlink control information is correctly received. The feedback method is applied to a network device end, and comprises: sending downlink control information, wherein the downlink control information is used for indicating common beam information; and receiving a feedback result for indicating whether the downlink control information is correctly received. By means of the present disclosure, whether downlink control information for indicating common beam information is correctly received by a terminal can be accurately learned, and HARQ ACK signaling overheads are reduced.

## Description

### TECHNICAL FIELD

The present disclosure relates to a field of communication technologies, in particularly, to a feedback method, a feedback apparatus, and a storage medium.

### BACKGROUND

In New Radio (NR), for example, when a communication frequency band is in frequency range 2, due to fast attenuation of a high-frequency channel, it is required to use beam based transmission and reception to ensure a coverage range.

In related arts, beams of a physical downlink control channel (PDCCH), a physical downlink shared channel (PDSCH), a physical uplink shared channel (PUSCH), a physical uplink control channel (PUCCH), and respective uplink and downlink reference signals, etc., are independently indicated. Moreover, the PDCCH and the PUCCH activate the beams by using a media access control (MAC) control element (CE). The PDSCH and the PUSCH indicate their respective beams through a downlink control information (DCI) signaling. Currently, a common beam, (or a unified beam, or a unified TCI state) is used for indication in order to reduce signaling overhead. The common beam may be configured to indicate uplink and downlink channels and/or reference signals of a terminal.

In related arts, the DCI signaling for scheduling the PDSCH is used to indicate the common beam. Whether common beam information is correctly received is required to determine through a hybrid automatic repeat request (HARQ) positive acknowledgment response (ACK) feedback of the PDSCH. However, determining whether the common beam information is correctly received based on the HARQ ACK feedback of the PDSCH may result in a mistake of whether the common beam information is correctly received. For example, when the HARQ ACK feedback of the PDSCH is a non-acknowledgement response (NACK), and the DCI signaling of the PDCCH is successfully decoded, that is, the common beam information is successfully received, there may be a mistake of not correctly receiving the common beam information.

### SUMMARY

To overcome the problems existing in the related art, the present disclosure provides a feedback method, a feedback apparatus, and a storage medium.

According to a first aspect of embodiments of the present disclosure, there is provided a feedback method, performed by a terminal. The feedback method includes:
receiving downlink control information configured to indicate common beam information; determining whether the downlink control information is correctly received, and sending, to a network device, a feedback result for indicating whether the downlink control information is correctly received.

In an implementation, a negative acknowledgement response for the downlink control information is sent to the network device in response to the downlink control information being not correctly received.

In an implementation, a positive acknowledgment response for the downlink control information is sent to the network device in response to the downlink control information being correctly received.

In an implementation, sending the positive acknowledgment response for the downlink control information to the network device includes:
sending the positive acknowledgment response for the downlink control information to the network device in response to the downlink control information being correctly received and a common beam indicated by the downlink control information being different from a beam currently used by the terminal.

In an implementation, the method further includes: not sending a positive acknowledgment response for the downlink control information to the network device in response to the downlink control information being correctly received and a common beam indicated by the downlink control information being same as a beam currently used by the terminal.

In an implementation, sending a positive acknowledgment response or a negative acknowledgement response for the downlink control information to the network device includes:
sending the positive acknowledgment response or the negative acknowledgement response for the downlink control information to the network device based on first bit resource information; in which, the first bit resource information is configured to indicate the positive acknowledgment response or the negative acknowledgement response for the downlink control information.

In an implementation, the first bit resource information includes bit resource information in a hybrid automatic repeat request codebook, and the hybrid automatic repeat request codebook includes a first type codebook and/or a second type codebook.

In an implementation, the bit resource information includes a bit position, and the bit position is determined based on a bit position corresponding to one of:
a dynamic scheduling transport block; a semi-persistent scheduling physical downlink shared channel; a dynamic scheduling code block group; a semi-persistent scheduling physical downlink shared channel release message; or secondary cell dormancy information.

In an implementation, determining whether the common beam indicated by the downlink control information is the same as the beam currently used by the terminal includes at least one of:
determining whether the common beam indicated by the downlink control information is the same as the beam currently used by the terminal based on the common beam indicated by the downlink control information and the beam currently used by the terminal; or determining whether the common beam indicated by the downlink control information is the same as the beam currently used by the terminal based on the downlink control information, in which the downlink control information is configured to indicate whether the common beam is a new beam.

In an implementation, the method further includes: in response to the common beam indicated by the downlink control information being the same as the beam currently used by the terminal, and a beam for receiving a control resource set being different from the common beam, using the common beam after a first time upon receiving the downlink control information.

In an implementation, the method further includes: in response to the common beam indicated by the downlink control information being different from the beam currently used by the terminal, using the common beam after a second time upon receiving the downlink control information or using the common beam after a third time upon sending the feedback result.

In an implementation, the downlink control information is further configured for scheduling of a physical downlink shared channel (PDSCH) and/or a physical uplink shared channel (PUSCH).

In an implementation, a positive acknowledgment response or a negative acknowledgement response of the PDSCH scheduled for the downlink control information is sent to the network device based on second bit resource information.

In an implementation, both the first bit resource information and the second bit resource information are same bit resource information.

In an implementation, both the first bit resource information and the second bit resource information are the same bit resource information in response to successfully receiving the common beam information and the PDSCH; and/or, both the first bit resource information and the second bit resource information are the same bit resource information in response to failing to receive the common beam information and the PDSCH.

In an implementation, the first bit resource information and the second bit resource information are different bit resource information.

In an implementation, the first bit resource information and the second bit resource information are different bit resource information in response to successfully receiving the common beam information and failing to receive the PDSCH.

According to a second aspect of embodiments of the present disclosure, there is provided a feedback method, performed by a network device. The feedback method includes:
sending downlink control information configured to indicate common beam information; and receiving a feedback result for indicating whether the downlink control information is correctly received.

In an implementation, a negative acknowledgement response for the downlink control information is received, and the negative acknowledgement response represents that the downlink control information is not correctly received.

In an implementation, a positive acknowledgment response for the downlink control information is received, and the positive acknowledgment response represents that the downlink control information is correctly received.

In an implementation, receiving the positive acknowledgment response for the downlink control information includes:
receiving the positive acknowledgment response for the downlink control information; the positive acknowledgment response represents that the downlink control information is correctly received and a common beam indicated by the downlink control information is different from a beam currently used by the terminal.

In an implementation, receiving a positive acknowledgment response or a negative acknowledgement response for the downlink control information includes: receiving the positive acknowledgment response or the negative acknowledgement response for the downlink control information based on first bit resource information; in which the first bit resource information is configured to indicate the positive acknowledgment response or the negative acknowledgement response for the downlink control information.

In an implementation, the first bit resource information includes bit resource information in a hybrid automatic repeat request codebook, and the hybrid automatic repeat request codebook includes a first type codebook and/or a second type codebook.

In an implementation, the bit resource information includes a bit position, and the bit position is determined based on a bit position corresponding to one of:
a dynamic scheduling transport block; a semi-persistent scheduling physical downlink shared channel; a dynamic scheduling code block group; a semi-persistent scheduling physical downlink shared channel release message; or secondary cell dormancy information.

In an implementation, the downlink control information is configured to indicate whether the common beam is a new beam.

In an implementation, the downlink control information is further configured for scheduling of a physical downlink shared channel (PDSCH) and/or a physical uplink shared channel (PUSCH).

In an implementation, a positive acknowledgment response or a negative acknowledgement response of the PDSCH scheduled for the downlink control information is received based on second bit resource information.

In an implementation, both the first bit resource information and the second bit resource information are same bit resource information.

In an implementation, both the first bit resource information and the second bit resource information being the same bit resource information represents that the common beam information and the PDSCH are successfully received, and/or, the common beam information and the PDSCH are failed to receive.

In an implementation, the first bit resource information and the second bit resource information are different bit resource information.

In an implementation, the first bit resource information and the second bit resource information being different bit resource information represents that the common beam information is successfully received and the PDSCH is failed to receive.

According to a third aspect of embodiments of the present disclosure, there is provided a feedback apparatus, performed by a terminal. The feedback apparatus includes:
a receiving unit, configured to receive downlink control information configured to indicate common beam information; a processing unit, configured to determine whether the downlink control information is correctly received; and a sending unit, configured to send, to a network device, a feedback result for indicating whether the downlink control information is correctly received.

In an implementation, the sending unit sends a negative acknowledgement response for the downlink control information to the network device in response to the downlink control information being not correctly received.

In an implementation, the sending unit sends a positive acknowledgment response for the downlink control information to the network device in response to the downlink control information being correctly received.

In an implementation, the sending unit sends the positive acknowledgment response for the downlink control information to the network device in response to the downlink control information being correctly received and a common beam indicated by the downlink control information being different from a beam currently used by the terminal.

In an implementation, the sending unit does not send a positive acknowledgment response for the downlink control information to the network device in response to the downlink control information being correctly received and a common beam indicated by the downlink control information being same as a beam currently used by the terminal.

In an implementation, the sending unit sends the positive acknowledgment response or the negative acknowledgement response for the downlink control information to the network device based on first bit resource information; in which, the first bit resource information is configured to indicate the positive acknowledgment response or the negative acknowledgement response for the downlink control information.

In an implementation, the first bit resource information includes bit resource information in a hybrid automatic repeat request codebook, and the hybrid automatic repeat request codebook includes a first type codebook and/or a second type codebook.

In an implementation, the bit resource information includes a bit position, and the bit position is determined based on a bit position corresponding to one of:
a dynamic scheduling transport block; a semi-persistent scheduling physical downlink shared channel; a dynamic scheduling code block group; a semi-persistent scheduling physical downlink shared channel release message; or secondary cell dormancy information.

In an implementation, the processing unit determines whether the common beam indicated by the downlink control information is the same as the beam currently used by the terminal, which includes at least one of:
determining whether the common beam indicated by the downlink control information is the same as the beam currently used by the terminal based on the common beam indicated by the downlink control information and the beam currently used by the terminal; or determining whether the common beam indicated by the downlink control information is the same as the beam currently used by the terminal based on the downlink control information, in which the downlink control information is configured to indicate whether the common beam is a new beam.

In an implementation, in response to the common beam indicated by the downlink control information being the same as the beam currently used by the terminal, and a beam for receiving a control resource set being different from the common beam, the processing unit determines using the common beam after a first time upon receiving the downlink control information.

In an implementation, in response to the common beam indicated by the downlink control information being different from the beam currently used by the terminal, the processing unit determines using the common beam after a second time upon receiving the downlink control information or the processing unit determines using the common beam after a third time upon sending the feedback result.

In an implementation, the downlink control information is further configured for scheduling of a physical downlink shared channel (PDSCH) and/or a physical uplink shared channel (PUSCH).

In an implementation, a positive acknowledgment response or a negative acknowledgement response of the PDSCH scheduled for the downlink control information is sent to the network device based on second bit resource information.

In an implementation, both the first bit resource information and the second bit resource information are same bit resource information.

In an implementation, both the first bit resource information and the second bit resource information are the same bit resource information in response to successfully receiving the common beam information and the PDSCH; and/or, both the first bit resource information and the second bit resource information are the same bit resource information in response to failing to receive the common beam information and the PDSCH.

In an implementation, the first bit resource information and the second bit resource information are different bit resource information.

In an implementation, the first bit resource information and the second bit resource information are different bit resource information in response to successfully receiving the common beam information and failing to receive the PDSCH.

According to a fourth aspect of embodiments of the present disclosure, there is provided a feedback apparatus, performed by a network device. The apparatus includes: a sending unit, configured to send downlink control information configured to indicate common beam information; and a receiving unit, configured to receive a feedback result for indicating whether the downlink control information is correctly received.

In an implementation, the receiving unit receives a negative acknowledgement response for the downlink control information, and the negative acknowledgement response represents that the downlink control information is not correctly received.

In an implementation, the receiving unit receives a positive acknowledgment response for the downlink control information, and the positive acknowledgment response represents that the downlink control information is correctly received.

In an implementation, the receiving unit receives the positive acknowledgment response for the downlink control information; and the positive acknowledgment response represents that the downlink control information is correctly received and a common beam indicated by the downlink control information is different from a beam currently used by the terminal.

In an implementation, the receiving unit receives the positive acknowledgment response or the negative acknowledgement response for the downlink control information based on first bit resource information; in which the first bit resource information is configured to indicate the positive acknowledgment response or the negative acknowledgement response for the downlink control information.

In an implementation, the first bit resource information includes bit resource information in a hybrid automatic repeat request codebook, and the hybrid automatic repeat request codebook includes a first type codebook and/or a second type codebook.

In an implementation, the bit resource information includes a bit position, and the bit position is determined based on a bit position corresponding to one of:
a dynamic scheduling transport block; a semi-persistent scheduling physical downlink shared channel; a dynamic scheduling code block group; a semi-persistent scheduling physical downlink shared channel release message; or secondary cell dormancy information.

In an implementation, the downlink control information is configured to indicate whether the common beam is a new beam.

In an implementation, the downlink control information is further configured for scheduling of a physical downlink shared channel (PDSCH) and/or a physical uplink shared channel (PUSCH).

In an implementation, the receiving unit receives a positive acknowledgment response or a negative acknowledgement response of the PDSCH scheduled for the downlink control information based on second bit resource information.

In an implementation, both the first bit resource information and the second bit resource information are same bit resource information.

In an implementation, both the first bit resource information and the second bit resource information being the same bit resource information represents that the common beam information and the PDSCH are successfully received, and/or, the common beam information and the PDSCH are failed to receive.

In an implementation, the first bit resource information and the second bit resource information are different bit resource information.

In an implementation, the first bit resource information and the second bit resource information being different bit resource information represents that the common beam information is successfully received and the PDSCH is failed to receive.

According to a fifth aspect of embodiments of present disclosure, a feedback device is provided. The device includes:
a processor; and a memory for storing instructions executable by the processor;
in which, the processor is configured to perform the feedback method in the first aspect or in any one implementation of the first aspect.

According to a sixth aspect of embodiments of the present disclosure, a feedback device is provided. The device includes:
a processor; and a memory for storing instructions executable by the processor;
in which, the processor is configured to perform the feedback method in the second aspect or any one implementation of the second aspect.

According to a seventh aspect of embodiments of the present disclosure, a storage medium stored with instructions is provided. When the instructions in the storage medium are executed by a processor of a terminal, the terminal is caused to perform the feedback method in the first aspect or any implementation of the first aspect.

According to an eighth aspect of embodiments of the present disclosure, a storage medium stored with instructions is provided. When the instructions in the storage medium are executed by a processor of a network device, the network device is caused to perform the feedback method in the second aspect or any implementation of the second aspect.

The technical solution provided in embodiments of the present disclosure may include the following beneficial effect. The terminal receives the downlink control information for indicating the common beam information, determines whether the downlink control information is correctly received, and sends, to the network device, a feedback result for indicating whether the downlink control information is correctly received, which may achieve determining whether the common beam information is correctly received by the terminal based on the downlink control information. The network device receives the feedback result for indicating whether the downlink control information is correctly received, and through the present disclosure, it may be accurately determined whether the downlink control information indicated by the common beam information is correctly received by the terminal. Moreover, the present disclosure may reduce an HARQ ACK signaling overhead compared to an HARQ feedback method of multiplexing a PDSCH.

It should be noted that, the details above and in the following are exemplary and illustrative, and do not constitute the limitation on the present disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
FIG. 1 is a schematic diagram illustrating a wireless communication system according to an exemplary embodiment.
FIG. 2 is a flowchart illustrating a feedback method according to an exemplary embodiment.
FIG. 3 is a flowchart illustrating a feedback method according to an exemplary embodiment.
FIG. 4 is a flowchart illustrating a feedback method according to an exemplary embodiment.
FIG. 5 is a flowchart illustrating a feedback method according to an exemplary embodiment.
FIG. 6 is a flowchart illustrating a feedback method according to an exemplary embodiment.
FIG. 7 is a flowchart illustrating a feedback method according to an exemplary embodiment.
FIG. 8 is a flowchart illustrating a feedback method according to an exemplary embodiment.
FIG. 9 is a schematic diagram illustrating a bit position mapping according to an exemplary embodiment.
FIG. 10 is a flowchart illustrating a feedback method according to an exemplary embodiment.
FIG. 11 is a flowchart illustrating a feedback method according to an exemplary embodiment.
FIG. 12 is a flowchart illustrating a feedback method according to an exemplary embodiment.
FIG. 13 is a flowchart illustrating a feedback method according to an exemplary embodiment.
FIG. 14 is a flowchart illustrating a feedback method according to an exemplary embodiment.
FIG. 15 is a flowchart illustrating a feedback method according to an exemplary embodiment.
FIG. 16 is a flowchart illustrating a feedback method according to an exemplary embodiment.
FIG. 17 is a flowchart illustrating a feedback method according to an exemplary embodiment.
FIG. 18 is a flowchart illustrating a feedback method according to an exemplary embodiment.
FIG. 19 is a flowchart illustrating a feedback method according to an exemplary embodiment.
FIG. 20 is a block diagram illustrating a feedback apparatus according to an exemplary embodiment.
FIG. 21 is a block diagram illustrating a feedback apparatus according to an exemplary embodiment.
FIG. 22 is a block diagram illustrating a device for feedback according to an exemplary embodiment.
FIG. 23 is a block diagram illustrating a device for feedback according to an exemplary embodiment.

### DETAILED DESCRIPTION

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

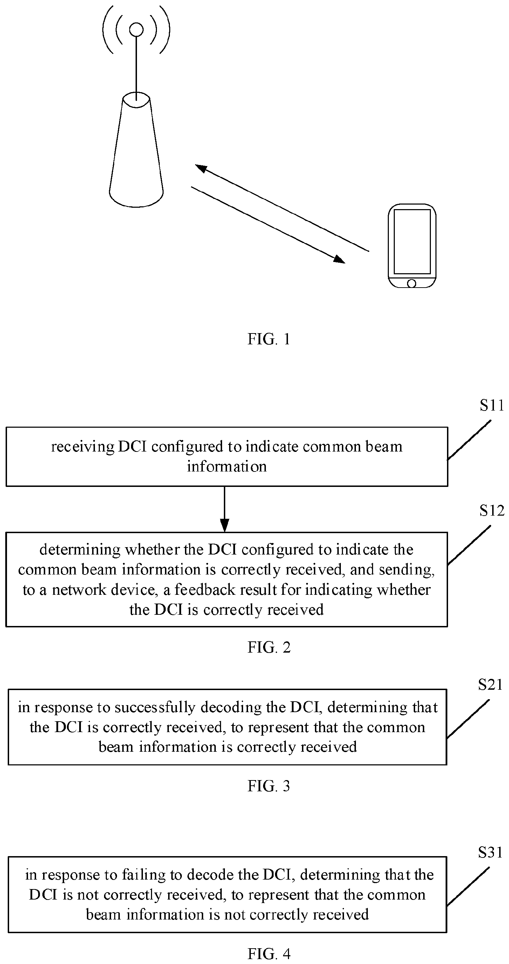

A feedback method in embodiments of the present disclosure is applicable for a wireless communication system as illustrated in FIG. 1. As illustrated in FIG. 1, the wireless communication system includes a terminal and a network device. The terminal is coupled to the network device through a wireless resource and performs data transmission and reception.

It may be understood that the wireless communication system as illustrated in FIG. 1 is merely illustrative purposes. The wireless communication system may further include other network devices, for example, a core network device, a wireless relay device and a wireless backhaul device, which are not illustrated in FIG. 1. A number of network devices and a number of terminals included in the wireless communication system are not limited in embodiments of the present disclosure.

It may be further understood that the wireless communication system in embodiments of the present disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. The networks may be classified into a 2G (generation) network, a 3G network, a 4G network or a future evolution network, such as, a 5G network, also referred to as a new radio (NR) network, based on capacities, rates, latencies and other factors of different networks. For ease of description, a wireless communication network is simply referred to as a network in the disclosure sometimes.

Further, the network device involved in the present disclosure may also be referred to as a wireless access network device. The wireless access network device may be an access point (AP), a wireless relay node, a wireless backhaul node, a transmission point (TP), or a transmission and reception point (TRP), etc., in a base station, an evolved node B (a base station), a home base station and a wireless fidelity (Wi-Fi) system, or may also be a gNB in an NR system, or may also be a component or a part of devices for constituting a base station. The network device further may be a vehicle-mounted device in an Internet of Vehicles (V2X) communication system. It should be understood that a specific technology and a specific device form adopted by the network device are not limited in embodiments of the present disclosure.

Further, the terminal in the present disclosure further may be referred to as a terminal device, a user equipment (UE), a mobile station (MS), a mobile terminal (MT), etc., which is a device that provides voice and/or data connectivity to a user. For example, the terminal may be a handheld device or a vehicle-mounted device, etc. with a wireless connection function. At present, some terminals may be, for example, a mobile phone, a pocket personal computer (PPC), a palm computer, a personal digital assistant (PDA), a notebook computer, a tablet computer, a wearable device, or a vehicle-mounted device. In addition, the terminal device further may be a vehicle-mounted device in an Internet of Vehicles (V2X) communication system. It should be understood that a specific technology and a specific device form adopted by the terminal are not limited in embodiments of the present disclosure.

In the present disclosure, a terminal performs beam based data transmission with a network device. In a process of performing the beam based data transmission, a common beam is used for indication of channels and/or reference signals in order to reduce signaling overhead. In related arts, the common beam may separately indicate uplink transmission or downlink transmission, or jointly indicate the uplink transmission and the downlink transmission. For example, when the network device indicates a common beam for downlink, the common beam may be configured to indicate the PDSCH of the terminal and all PDCCHs or a part of PDCCHs (such as a UE dedicated PDCCH) of the terminal. When the network device indicates a common beam for uplink, the common beam may be configured to indicate the PUSCH of the terminal, and all PUCCHs or a part of PUCCHs of the terminal. When the network device indicates one common beam, the beam may be configured for uplink and downlink channels and/or reference signals of the terminal.

The common beam is an indicator of which channels and/or reference signals are used, which is indicated by means of a signaling or specified by a standard, and can be obtained by the terminal.

In related arts, a DCI signaling for scheduling the PDSCH is used to indicate a common beam, and whether common beam information in the DCI is correctly received is determined by multiplexing an HARQ ACK feedback of the PDSCH. For example, when the HARQ ACK feedback of the PDSCH is NACK, it indicates both failing to receive the PDSCH and failing to receive the common beam information. When the HARQ ACK feedback of the PDSCH is ACK, it indicates both successfully receiving the PDSCH and successfully receiving the common beam information. But in fact, when the HARQ ACK feedback of the PDCCH is NACK, there is still a situation where the DCI signaling of the PDCCH is successfully decoded, that is, the common beam information is received successfully, but the PDSCH fails to receive. Therefore, in this case, the NACK fed back by the terminal cannot accurately inform the network device whether the common beam information has been successfully received or not. That is, whether the common beam information indicated by the DCI is correctly received cannot be accurately determined by the network device by multiplexing the HARQ ACK feedback of the PDSCH.

An embodiment of the present disclosure provides a feedback method, mainly applied to a scenario of an HARQ ACK feedback when a DCI signaling indicates common beam information. A terminal receives DCI for indicating the common beam information and determines whether the DCI for indicating the common beam information is correctly received, and sends, to the network device, a feedback result for indicating whether the DCI is correctly received. Therefore, an HARQ ACK signaling overhead is reduced, and it is ensured that the network device accurately obtains whether the common beam information has been correctly received by the terminal.

In an embodiment of the present disclosure, the DCI is configured to indicate one or more common beams. The common beam may sometimes be referred to as a common transmission configuration indication state (common TCI state) or a unified TCI state. When the unified TCI state is used for both uplink and downlink, it can also be called a joint TCI state. When the unified TCI state is only used for downlink or uplink, it can also be referred to as a separate UL TCI state or a separate DL TCI state.

It can be understood that the common TCI state/unified TCI state in an embodiment of the present disclosure can be understood as corresponding to the common beam. In an embodiment of the present disclosure, the common beam and the common TCI state/unified TCI state are sometimes used interchangeably, and those skilled in the field should understand their consistency of meaning.

FIG. 2 is a flowchart illustrating a feedback method according to an exemplary embodiment. As illustrated in FIG. 2, the feedback method may be performed by a terminal, and includes the following steps.

At step S11, DCI is received. The DCI is configured to indicate common beam information.

At step S12, whether the DCI for indicating the common beam information is correctly received is determined, a feedback result for indicating whether the DCI is correctly received is sent to a network device.

In the feedback method provided in an embodiment of the present disclosure, the terminal receives the DCI, the DCI is configured to indicate the common beam information. The common beam information is configured to indicate beams corresponding to all members in a common beam group. The terminal determines whether the common beam information indicated by the DCI is correctly received, and feds back HARQ ACK/NACK information to the network device.

It can be understood that, in an embodiment of the present disclosure, a member in the common beam group includes at least one channel and/or at least one reference signal resource. The channels include at least one of a PDCCH, a PDSCH, a PUSCH, a PUCCH, a physical random access channel (PRACH), and a physical broadcast channel (PBCH).

Further, when a member includes the PDCCH, the member may be a control resource set (CORESET) for PDCCH transmission.

The PDSCH may be indicated by a CORESET for scheduling the PDSCH, or identified by an identifier of a semi-persistent PDSCH. The PUCCH is represented by a resource ID of the PUCCH or indicated by a CORESET for scheduling the PUCCH. The PUSCH is indicated by a CORESET for scheduling the PUSCH, or identified by an identifier of a configured grant PUSCH. The PRACH is indicated by a randomly accessing resource identifier. The PBCH is indicated by a synchronization signal and PBCH block index (SSB index).

It can be understood that, in an embodiment of the present disclosure, a reference signal resource of a member in the common beam group includes at least one of a channel state information reference signal (CSI-RS), a sounding reference signal (SRS), a positioning reference signal (PRS), a tracking reference signal (TRS), a synchronization signal and PBCH block (SSB), etc.

The CSI-RS includes a CSI-RS for channel state information measurement, or a CSI-RS for beam measurement, or a CSI-RS for pathloss estimation. The SRS includes an SRS for channel state information measurement based on codebook or non-codebook, an SRS for beam measurement, or an SRS for positioning measurement. The reference signal resource is indicated by a resource identifier or a resource set identifier.

In the feedback method provided by an embodiment of the present disclosure, on the one hand, the DCI received by the terminal is further configured for scheduling of the PDSCH and/or the PUSCH. For example, the DCI is further configured to schedule a time and/or frequency domain resource for the PDSCH.

In the feedback method provided by an embodiment of the present disclosure, on the other hand, the DCI received by the terminal is only configured to indicate common beam information and is not configured for scheduling of the PDSCH and/or the PUSCH.

In the feedback method provided by an embodiment of the present disclosure, determining, by the terminal, whether the DCI is correctly received can be understood as determining whether the common beam information is correctly received based on the DCI. In the following embodiments, sometimes determining whether the DCI is correctly received and determining whether the common beam information is correctly received will be used interchangeably, and those skilled in the field should understand the consistency of their meanings.

In the feedback method provided by an embodiment of the present disclosure, the terminal can determine whether the common beam information is correctly received based on whether the DCI is successfully decoded or not.

FIG. 3 is a flowchart illustrating a feedback method according to an exemplary embodiment. The feedback method may be executed separately, or may be executed together with other embodiments of the present disclosure. As illustrated in FIG. 3, the feedback method may be performed by a terminal, and includes the following steps.

At step S21, in response to successfully decoding the DCI, it is determined that the DCI is correctly received, and it represents that the common beam information is correctly received.

FIG. 4 is a flowchart illustrating a feedback method according to an exemplary embodiment. The feedback method may be executed separately, or may be executed together with other embodiments of the present disclosure. As illustrated in FIG. 4, the feedback method may be performed by a terminal, and includes the following steps.

At step S31, in response to failing to decode the DCI, it is determined that the DCI is not correctly received, and it represents that the common beam information is not correctly received.

In the feedback method provided by an embodiment of the present disclosure, the terminal sends the feedback result for indicating whether the DCI is correctly received to the network device, which may also be understood as that the terminal sends a feedback result for indicating whether the common beam information is correctly received to the network device. In an embodiment of the present disclosure, the terminal may send, to the network device, a positive acknowledgment response or a negative acknowledgement response for the DCI, to indicate whether the common beam information is correctly received.

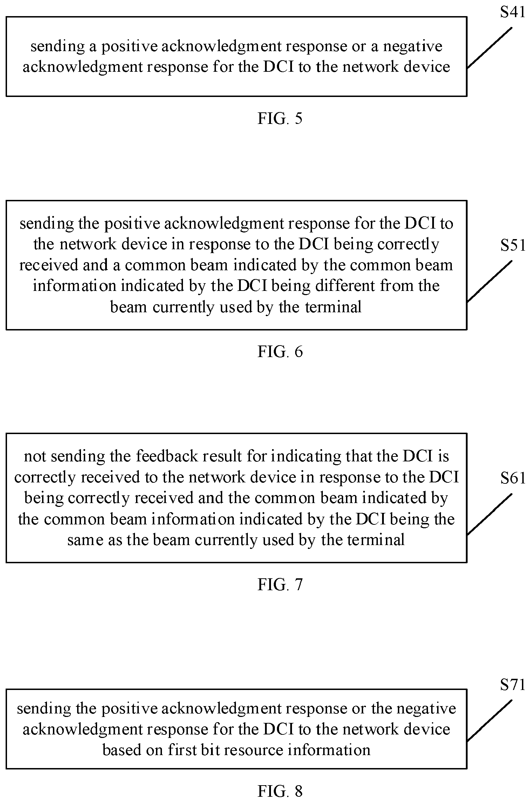

FIG. 5 is a flowchart illustrating a feedback method according to an exemplary embodiment. The feedback method may be executed separately, or may be executed together with other embodiments of the present disclosure. As illustrated in FIG. 5, the feedback method may be performed by a terminal, and includes the following steps.

At step S41, a positive acknowledgment response or a negative acknowledgement response for the DCI is sent to the network device.

In an implementation, in the feedback method provided by an embodiment of the present disclosure, in response to the DCI being not correctly received, the negative acknowledgement response for the DCI is sent to the network device, to represent that the common beam information is not correctly received.

In another implementation, in the feedback method provided by an embodiment of the present disclosure, in response to the DCI being correctly received, the positive acknowledgment response for the DCI is sent to the network device, to represent that the common beam information is correctly received.

In the feedback method provided by an embodiment of the present disclosure, the terminal determines whether the common beam information indicated by the DCI is correctly received. In response to the common beam information being correctly received, the terminal may further determine whether a beam indicated by the common beam information indicated by the DCI is the same as a beam currently used by the terminal.

In an embodiment of the present disclosure, when determining whether a common beam indicated by the common beam information indicated by the DCI is the same as the beam currently used by the terminal, on the one hand, the terminal may decode the common beam information indicated by the DCI, compare the common beam indicated by the common beam information indicated by the DCI with the beam currently used by the terminal, and determine whether the common beam indicated by the common beam information indicated by the DCI is the same as the beam currently used by the terminal. On the other hand, the DCI further includes bit information for indicating whether the common beam is a new beam. The terminal decodes the DCI and determines whether the common beam indicated by the DCI is the same as the current beam used by the terminal based on the bit information for indicating whether the common beam is the new beam, in which the bit information is indicated by the DCI.

In an implementation, in response to the common beam information being correctly received and the common beam indicated by the DCI being the different from the beam currently used by the terminal, the positive acknowledgment response for the DCI is sent to the network device.

FIG. 6 is a flowchart illustrating a feedback method according to an exemplary embodiment. The feedback method may be executed separately, or may be executed together with other embodiments of the present disclosure. As illustrated in FIG. 6, the feedback method may be performed by a terminal, and includes the following steps.

At step S51, the positive acknowledgment response for the DCI is sent to the network device in response to the DCI and a common beam indicated by the common beam information indicated by the DCI being different from the beam currently used by the terminal.

In an implementation, in response to the DCI being correctly received and the common beam indicated by the common beam information indicated by the DCI being the same as the beam currently used by the terminal, a feedback result for indicating that the DCI is correctly received is not sent to the network device.

FIG. 7 is a flowchart illustrating a feedback method according to an exemplary embodiment. The feedback method may be executed separately, or may be executed together with other embodiments of the present disclosure. As illustrated in FIG. 7, the feedback method may be performed by a terminal, and includes the following steps.

At step S61, the feedback result for indicating that the DCI is correctly received is not sent to the network device in response to the DCI being correctly received and the common beam indicated by the common beam information indicated by the DCI being the same as the beam currently used by the terminal.

In an example, in the feedback method provided by an embodiment of the present disclosure, the terminal determines whether the common beam information indicated by the DCI is successfully received based on whether the DCI is successfully received. In response to determining that the DCI is successfully received, the terminal determines that the common beam information indicated by the DCI is successfully received. The terminal determines whether the common beam indicated by the DCI is the same as the beam currently used by the terminal. In response to the common beam indicated by the DCI is the same as the beam currently used by the terminal, the terminal does not provide a feedback on ACK and/or NACK for a DCI signaling. For example, a bit value of the feedback being 1 identifies ACK and the bit value of the feedback being 0 identifies NACK. Alternatively, the bit value being 0 identifies ACK and the bit value being 1 identifies NACK. In response to the common beam indicated by the DCI being different from the beam currently used by the terminal, the terminal may provide a feedback on ACK for the DCI signaling. In response to the terminal determining that the common beam information indicated by the DCI is not successfully received, the terminal may provide a feedback on NACK for the DCI signaling.

In the feedback method provided in an embodiment of the present disclosure, when sending the positive acknowledgment response or the negative acknowledgement response for the DCI to the network device, the terminal may send the positive acknowledgment response or the negative acknowledgement response for the DCI to the network device based on bit resource information. For the convenience of description, the bit resource information for indicating the positive acknowledgment response or the negative acknowledgement response for the DCI is referred to as first bit resource information.

FIG. 8 is a flowchart illustrating a feedback method according to an exemplary embodiment. The feedback method may be executed separately, or may be executed together with other embodiments of the present disclosure. As illustrated in FIG. 8, the feedback method may be performed by a terminal, and includes the following steps.

At step S71, the positive acknowledgment response or the negative acknowledgement response for the DCI is sent to the network device based on the first bit resource information.

The first bit resource information is configured to indicate the positive acknowledgment response or the negative acknowledgement response for the DCI. The first bit resource information may also be understood as bit resource information for indicating DCI HARQ ACK. The DCI HARQ ACK may be understood as DCI HARQ ACK for indicating the common beam information.

In an implementation, the first bit resource information includes bit resource information in an HARQ ACK codebook, and the HARQ ACK codebook includes codebooks with the same type or codebooks with different types, such as a first type codebook and/or a second type codebook. The first type codebook may be a fixed codebook, and the second type codebook may be a dynamic codebook.

In an implementation, the first bit resource information may include a bit position.

In an example, the bit position in the HARQ codebook which is included in the first bit resource information of DCI HARQ ACK includes a first type fixed codebook and a second type dynamic codebook.

In the feedback method provided in an embodiment of the present disclosure, the bit position in the HARQ codebook which is included in the first bit resource information of DCI HARQ ACK may be determined based on a bit position corresponding to one of the following items.
A: Dynamic scheduling transport block (TB).
   In the feedback method provided in an embodiment of the present disclosure, the bit position in the HARQ codebook which is included in the first bit resource information of DCI HARQ ACK is determined like one TB dynamically scheduled. For example, the bit position of DCI HARQ ACK in the HARQ codebook is determined like the first TB or the last TB.
B: Semi-persistent scheduling (SPS) PDSCH.
   In the feedback method provided in an embodiment of the present disclosure, the bit position in the HARQ codebook which is included in the first bit resource information of DCI HARQ ACK is determined like one SPS PDSCH. For example, the bit position of DCI HARQ ACK in the HARQ codebook is determined like the first SPS PDSCH or the last SPS PDSCH.
C: Dynamic scheduling code block group (CBG).
   In the feedback method provided in an embodiment of the present disclosure, the bit position in the HARQ codebook which is included in the first bit resource information of DCI HARQ ACK is determined like one CBG dynamically scheduled. For example, the bit position of DCI HARQ ACK in the HARQ codebook is determined like the first CBG or the last CBG.
D: Semi-persistent scheduling physical downlink shared channel release message (SPS PDSCH release).

In the feedback method provided in an embodiment of the present disclosure, the bit position in the HARQ codebook which is included in the first bit resource information of DCI HARQ ACK is determined like one SPS PDSCH release. For example, the bit position of DCI HARQ ACK in the HARQ codebook is determined like the first SPS PDSCH release or the last SPS PDSCH release.

In a case where the common beam indication information and the SPS PDSCH release do not appear simultaneously, a bit of a HARQ feedback of the common beam indicator information is placed at a position of the SPS PDSCH release for feedback. A bit position of a HARQ feedback of the SPS PDSCH release is the same as a bit position of a HARQ feedback of the SPS PDSCH.

E: Secondary cell dormancy information (SCell dormancy).

In the feedback method provided in an embodiment of the present disclosure, the bit position in the HARQ codebook which is included in the first bit resource information of DCI HARQ ACK is determined like one SCell dormancy. For example, the bit position of DCI HARQ ACK in the HARQ codebook is determined like the first SCell dormancy or the last SCell dormancy.

In related arts, when determining the bit position of the HARQ feedback corresponding to the TB, the CBG, or the SPS PDSCH release of each PDSCH, an earliest time unit is first checked, and then the TB, the CBG, or the SPS PDSCH release of each PDSCH on a service cell with a minimum service cell index within a same time unit is checked. Additionally, for the same service cell, a bit of the HARQ feedback based on the TB is in one of sub codebooks, and a bit of the HARQ feedback based on the CBG feedback is in another sub codebook. In other words, the bit of each HARQ feedback has a corresponding position, therefore, as mentioned above, the HARQ feedback for the DCI indicated by the beam indicator information may be placed in the same position as one of the TB, the CBG, the SPS PDSCH release, and the SCell dormancy.

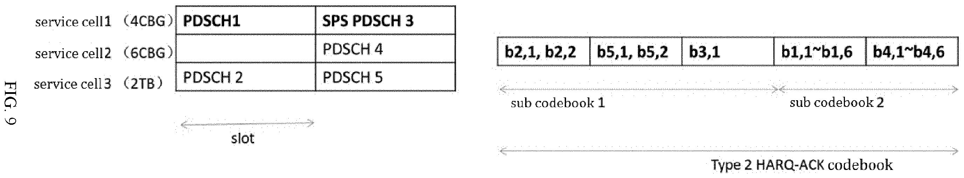

In an example, assuming that cell#1 is configured with CBG transmission and one PDSCH supports up to 4 CBGs, and cell#2 is configured with the CBG transmission and one PDSCH supports up to 6 CBGs, each dynamic scheduling PDSCH in sub codebook 2 corresponds to a 6bit ACK/NACK. In a cast that cell#3 is not configured with the CBG transmission and one PDSCH supports up to 2 TBs, then each dynamic scheduling PDSCH in sub codebook 1 corresponds to a 2-bit ACK/NACK. The ACK/NACK corresponding to the dynamic scheduling PDSCH in sub codebook 1 comes first, while the ACK/NACK corresponding to the SPS PDSCH maps to the last in sub codebook 1, and one SPS PDSCH corresponds to 1-bit ACK/NACK information. In FIG. 9, b_{i,j} identifies ACK/NACK information of the jth bit corresponding to PDSCH i. For example, b_{2,1} in FIG. 9 identifies ACK/NACK information of the first bit corresponding to PDSCH 2. The b_{2,2} in FIG. 9 identifies ACK/NACK information of the second bit corresponding to PDSCH 2.

In the feedback method provided in an embodiment of the present disclosure, the terminal may determine a time of using the common beam indicated by the common beam information.

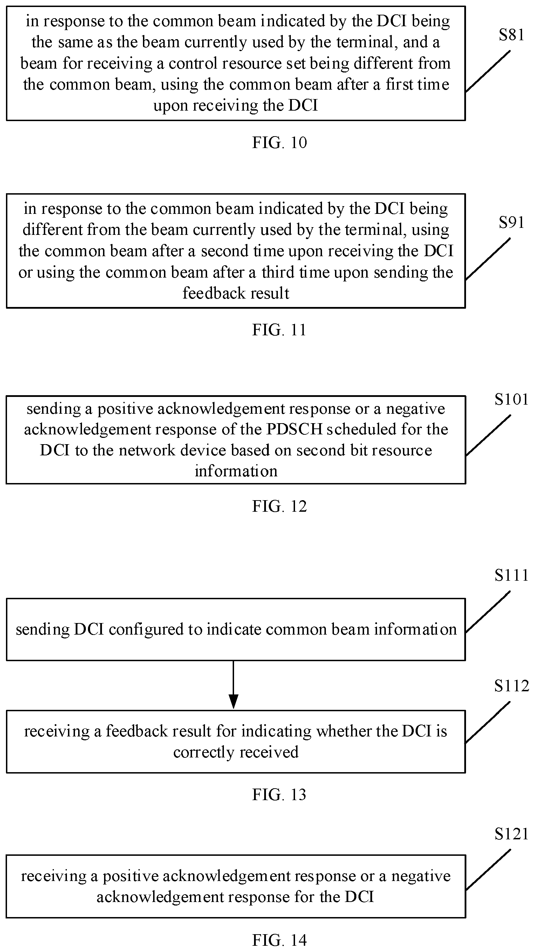

FIG. 10 is a flowchart illustrating a feedback method according to an exemplary embodiment. The feedback method may be executed separately, or may be executed together with other embodiments of the present disclosure. As illustrated in FIG. 10, the feedback method may be performed by a terminal, and includes the following steps.

At step S81, in response to the common beam indicated by the DCI being the same as the beam currently used by the terminal, and a beam for receiving a control resource set being different from the common beam, the common beam is used after a first time upon receiving the DCI.

In an example, the common beam indicated by the DCI is the same as the beam currently used by the terminal (the common beam is an old beam). In response to the beam for receiving the CORESET being different from the common beam, the time used is a T0 time after the DCI signaling. The T0 time may be analogized to a time duration of R16, which will not be limited herein.

FIG. 11 is a flowchart illustrating a feedback method according to an exemplary embodiment. The feedback method may be executed separately, or may be executed together with other embodiments of the present disclosure. As illustrated in FIG. 11, the feedback method may be performed by a terminal, and includes the following steps.

At step S91, in response to the common beam indicated by the DCI being different from the beam currently used by the terminal, the common beam is used after a second time upon receiving the DCI or the common beam is used after a third time upon sending the feedback result.

In an example, the common beam indicated by the DCI is different from the beam currently used by the terminal (the common beam is a new beam). The time used is a T1 time after the DCI signaling, and/or a T2 time after the HARQ ACK feedback. The T1 time may be analogized to a time duration of R16, or further include a time for the HARQ ACK feedback, which will not be limited herein.

In the feedback method provided in an embodiment of the present disclosure, in a case that the DCI is configured to indicate the common beam information and for scheduling of the PDSCH and/or the PUSCH, the terminal may send a positive acknowledgment response or a negative acknowledgement response of the PDSCH scheduled for the DCI to the network device based on bit resource information. For the convenience of description, bit resource information of the positive acknowledgment response or the negative acknowledgement response of the PDSCH scheduled for the DCI is referred to as second bit resource information.

FIG. 12 is a flowchart illustrating a feedback method according to an exemplary embodiment. The feedback method may be executed separately, or may be executed together with other embodiments of the present disclosure. As illustrated in FIG. 12, the feedback method may be performed by a terminal, and includes the following steps.

At step S101, a positive acknowledgment response or a negative acknowledgement response of the PDSCH scheduled for the DCI is sent to the network device based on the second bit resource information.

In an implementation, both the first bit resource information and the second bit resource information are same bit resource information.

Both the first bit resource information and the second bit resource information are the same bit resource information in response to successfully receiving the common beam information and the PDSCH. And/or, both the first bit resource information and the second bit resource information are the same bit resource information in response to failing to receive the common beam information and the PDSCH.

In an implementation, the first bit resource information and the second bit resource information are different bit resource information.

The first bit resource information and the second bit resource information are different bit resource information in response to successfully receiving the common beam information and failing to receive the PDSCH.

In the feedback method provided in an embodiment of the present disclosure, the terminal receives the DCI for indicating the common beam information, determines whether the DCI is correctly received to determine whether the common beam information indicated by the DCI is correctly received, and sends, to the network device, a feedback result for indicating whether the DCI is correctly received. Therefore, the present disclosure may accurately determine whether the downlink control information indicated by the common beam information is correctly received by the terminal. Moreover, the present disclosure may reduce an HARQ ACK signaling overhead compared to an HARQ feedback method of multiplexing a PDSCH. The network device receives the feedback result for indicating whether the DCI is correctly received, which may accurately determine whether the common beam information indicated by the DCI is correctly received by the terminal.

Based on the same conception, there is further provided a feedback method, performed by a network device, in embodiments of the present disclosure.

FIG. 13 is a flowchart illustrating a feedback method according to an exemplary embodiment. The feedback method may be executed separately, or may be executed together with other embodiments of the present disclosure. As illustrated in FIG. 13, the feedback method may be performed by a network device, and includes the following steps.

At step S111, DCI is sent. The DCI is configured to indicate common beam information.

At step S112, a feedback result for indicating whether the downlink control information is correctly received is received.

In an implementation, when the terminal successfully decodes the DCI, the feedback result indicates that the DCI is correctly received. When the terminal fails to decode the DCI, the feedback result indicates that the DCI is not correctly received.

FIG. 14 is a flowchart illustrating a feedback method according to an exemplary embodiment. The feedback method may be executed separately, or may be executed together with other embodiments of the present disclosure. As illustrated in FIG. 14, the feedback method may be performed by a network device, and includes the following steps.

At step S121, a positive acknowledgment response or a negative acknowledgement response for the DCI is received.

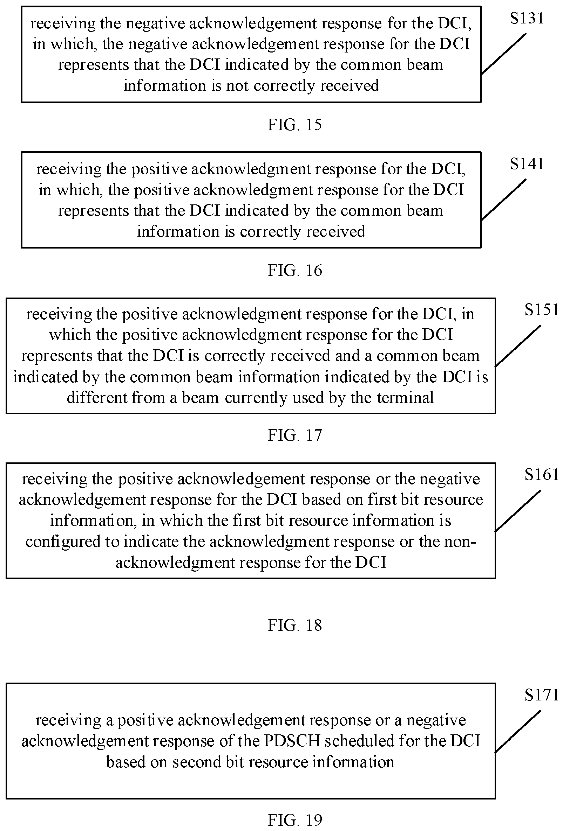

FIG. 15 is a flowchart illustrating a feedback method according to an exemplary embodiment. The feedback method may be executed separately, or may be executed together with other embodiments of the present disclosure. As illustrated in FIG. 15, the feedback method may be performed by a network device, and includes the following steps.

At step S 131, the negative acknowledgement response for the DCI is received, and the negative acknowledgement response for the DCI represents that the DCI indicated by the common beam information is not correctly received.

FIG. 16 is a flowchart illustrating a feedback method according to an exemplary embodiment. The feedback method may be executed separately, or may be executed together with other embodiments of the present disclosure. As illustrated in FIG. 16, the feedback method may be performed by a network device, and includes the following steps.

At step S 141, the positive acknowledgment response for the DCI is received, and the positive acknowledgment response for the DCI represents that the DCI indicated by the common beam information is correctly received.

FIG. 17 is a flowchart illustrating a feedback method according to an exemplary embodiment. The feedback method may be executed separately, or may be executed together with other embodiments of the present disclosure. As illustrated in FIG. 17, the feedback method may be performed by a network device, and includes the following steps.

At step S 151, the positive acknowledgment response for the DCI is received. The positive acknowledgment response for the DCI represents that the DCI is correctly received and a common beam indicated by the common beam information indicated by the DCI is different from a beam currently used by the terminal.

FIG. 18 is a flowchart illustrating a feedback method according to an exemplary embodiment. The feedback method may be executed separately, or may be executed together with other embodiments of the present disclosure. As illustrated in FIG. 18, the feedback method may be performed by a network device, and includes the following steps.

At step S161, the positive acknowledgment response or the negative acknowledgement response for the DCI is received based on first bit resource information. The first bit resource information is configured to indicate the positive acknowledgment response or the negative acknowledgement response for the DCI.

In an implementation, the first bit resource information includes bit resource information in a hybrid automatic repeat request codebook, and the hybrid automatic repeat request codebook includes a first type codebook and/or a second type codebook.

In an implementation, the bit resource information includes a bit position, and the bit position is determined based on a bit position corresponding to one of: a dynamic scheduling transport block; a semi-persistent scheduling physical downlink shared channel; a dynamic scheduling code block group; a semi-persistent scheduling physical downlink shared channel release message; or secondary cell dormancy information.

In an implementation, the DCI further includes bit information for indicating whether the common beam indicated by the common beam information is a new beam.

In an implementation, the DCI is further configured for scheduling of a PDSCH and/or a PUSCH.

FIG. 19 is a flowchart illustrating a feedback method according to an exemplary embodiment. The feedback method may be executed separately, or may be executed together with other embodiments of the present disclosure. As illustrated in FIG. 19, the feedback method may be performed by a network device, and includes the following steps.

At step S171, a positive acknowledgment response or a negative acknowledgement response of the PDSCH scheduled for the DCI is received based on second bit resource information.

In an implementation, both the first bit resource information and the second bit resource information are same bit resource information.

Both the first bit resource information and the second bit resource information being the same bit resource information represents that the common beam information and the PDSCH are successfully received, and/or, the common beam information and the PDSCH are failed to receive.

In an implementation, the first bit resource information and the second bit resource information are different bit resource information.

The first bit resource information and the second bit resource information being different bit resource information represents that the common beam information is successfully received and the PDSCH is failed to receive.

It can be understood that the feedback method applied to the network device provided in an embodiment of the present disclosure is similar to the feedback method performed by the terminal, and the similarities will not be repeated here.

It can be further understood that the feedback method provided in an embodiment of the present disclosure can be applied to an implementation process of achieving feedback through interaction between the terminal and the network device. In the feedback method for the interaction between the terminal and the network device, the terminal and the network device each has relevant functions to implement the above embodiments, which will not be further repeated herein.

It needs to be noted that, those skilled in the art may understand that various implementations/embodiments involved in embodiments of the present disclosure may be used in combination with the above embodiments, and may be independently used. Whether independently used or used in combination with the above embodiments, the implementation principle is similar. In embodiments of the present disclosure, part of embodiments is illustrated by the implementations used together. It may be understood by those skilled in the art that the examples are not a limitation of embodiments of the present disclosure.

Based on the same conception, a feedback apparatus is further provided in embodiments of the present disclosure.

It may be understood that the apparatus for reselecting the cell provided in embodiments of the present disclosure includes hardware structures and/or software modules that perform corresponding functions in order to achieve the above functions. In combination with modules and algorithm steps of examples described in embodiments of the present disclosure, the embodiments of the present disclosure may be implemented in the form of a hardware or a combination of a hardware and a computer software. Whether a certain function is executed by a hardware or a computer software driving a hardware depends on specific applications and design constraints of the technical solution. Those skilled in the art may adopt different methods for each specific application to implement the described functions, but such implementation should not be considered as beyond the scope of the technical solutions in embodiments of the present disclosure.

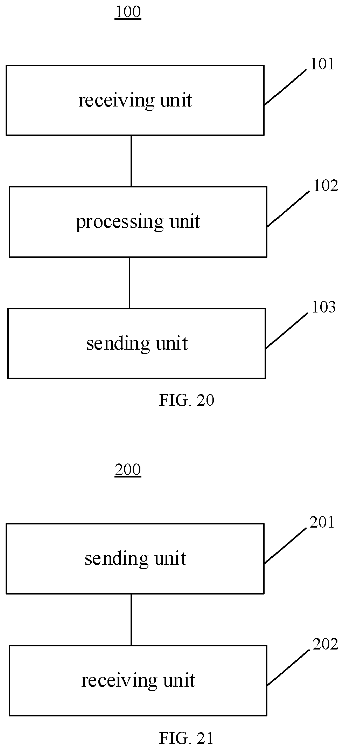

FIG. 20 is a block diagram illustrating a feedback apparatus according to an exemplary embodiment. As illustrated in FIG. 20, the feedback apparatus 100 is performed by a terminal. The feedback apparatus 100 includes a receiving unit 101, a processing unit 102 and a sending unit 103.

The receiving unit 101 is configured to receive DCI configured to indicate common beam information. The processing unit 102 is configured to determine whether the DCI is correctly received. The sending unit 103 is configured to send, to a network device, a feedback result for indicating whether the downlink control information is correctly received.

In an implementation, the sending unit 103 sends a negative acknowledgement response for the DCI to the network device in response to the DCI being not correctly received.

In an implementation, the sending unit 103 sends a positive acknowledgment response for the DCI to the network device in response to the DCI being correctly received.

In an implementation, the sending unit 103 sends the positive acknowledgment response for the DCI to the network device in response to the DCI being correctly received and a common beam indicated by the DCI being different from a beam currently used by the terminal.

In an implementation, the sending unit 103 does not send a positive acknowledgment response for the DCI to the network device in response to the DCI being correctly received and a common beam indicated by the DCI being same as a beam currently used by the terminal.

In an implementation, the sending unit 103 sends the positive acknowledgment response or the negative acknowledgement response for the DCI to the network device based on first bit resource information; in which, the first bit resource information is configured to indicate the positive acknowledgment response or the negative acknowledgement response for the DCI.

In an implementation, the first bit resource information includes bit resource information in an HARQ codebook, and the HARQ codebook includes a first type codebook and/or a second type codebook.

In an implementation, the bit resource information includes a bit position, and the bit position is determined based on a bit position corresponding to one of:
a dynamic scheduling transport block; a semi-persistent scheduling physical downlink shared channel; a dynamic scheduling code block group; a semi-persistent scheduling physical downlink shared channel release message; or secondary cell dormancy information.

In an implementation, the processing unit 102 determines whether the common beam indicated by the DCI is the same as the beam currently used by the terminal, which includes at least one of:
determining whether the common beam indicated by the DCI is the same as the beam currently used by the terminal based on the common beam indicated by the DCI and the beam currently used by the terminal; or determining whether the common beam indicated by the DCI is the same as the beam currently used by the terminal based on the DCI, in which the DCI is configured to indicate whether the common beam is a new beam.

For example, the DCI further includes bit information for indicating whether the common beam is a new beam. The terminal decodes the DCI and determines whether the common beam indicated by the DCI is the same as the beam currently used by the terminal based on the bit information for indicating whether the common beam is the new beam which is indicated by the DCI.

In an implementation, in response to the common beam indicated by the DCI being the same as the beam currently used by the terminal, and a beam for receiving a control resource set being different from the common beam, the processing unit 102 determines using the common beam after a first time upon receiving the DCI.

In an implementation, in response to the common beam indicated by the DCI being different from the beam currently used by the terminal, the processing unit 102 determines using the common beam after a second time upon receiving the DCI or the processing unit 102 determines using the common beam after a third time upon sending the feedback result.

In an implementation, the DCI is further configured for scheduling of a PDSCH and/or a PUSCH.

In an implementation, a positive acknowledgment response or a negative acknowledgement response of the PDSCH scheduled for the downlink control information is sent to the network device based on second bit resource information.

In an implementation, both the first bit resource information and the second bit resource information are same bit resource information.

In an implementation, both the first bit resource information and the second bit resource information are the same bit resource information in response to successfully receiving the common beam information and the PDSCH; and/or, both the first bit resource information and the second bit resource information are the same bit resource information in response to failing to receive the common beam information and the PDSCH.

In an implementation, the first bit resource information and the second bit resource information are different bit resource information.

In an implementation, the first bit resource information and the second bit resource information are different bit resource information in response to successfully receiving the common beam information and failing to receive the PDSCH.

FIG. 21 is a block diagram illustrating a feedback apparatus according to an exemplary embodiment. As illustrated in FIG. 21, the feedback apparatus 200 is performed by a network device. The feedback apparatus 200 includes a sending unit 201 and a receiving unit 202.

The sending unit 201 is configured to send DCI configured to indicate common beam information. The receiving unit 202 is configured to receive a feedback result for indicating whether the DCI is correctly received.

In an implementation, the receiving unit 202 receives a negative acknowledgement response for the DCI, and the negative acknowledgement response represents that the DCI is not correctly received.

In an implementation, the receiving unit 202 receives a positive acknowledgment response for the DCI, and the positive acknowledgment response represents that the DCI is correctly received.

In an implementation, the receiving unit 202 receives the positive acknowledgment response for the DCI; and the positive acknowledgment response represents that the DCI is correctly received and a common beam indicated by the DCI is different from a beam currently used by the terminal.

In an implementation, the receiving unit 202 receives the positive acknowledgment response or the negative acknowledgement response for the DCI based on first bit resource information; in which the first bit resource information is configured to indicate the positive acknowledgment response or the negative acknowledgement response for the DCI.

In an implementation, the first bit resource information includes bit resource information in a HARQ codebook, and the HARQ codebook includes a first type codebook and/or a second type codebook.

In an implementation, the bit resource information includes a bit position, and the bit position is determined based on a bit position corresponding to one of:
a dynamic scheduling transport block; a semi-persistent scheduling physical downlink shared channel; a dynamic scheduling code block group; a semi-persistent scheduling physical downlink shared channel release message; or secondary cell dormancy information.

In an implementation, the DCI is configured to indicate whether the common beam is a new beam. For example, the DCI further includes bit information for indicating whether the common beam is the new beam.

In an implementation, the DCI is further configured for scheduling of a PDSCH and/or a PUSCH.

In an implementation, the receiving unit 202 receives a positive acknowledgment response or a negative acknowledgement response of the PDSCH scheduled for the DCI based on second bit resource information.

In an implementation, both the first bit resource information and the second bit resource information are same bit resource information.

In an implementation, both the first bit resource information and the second bit resource information being the same bit resource information represents that the common beam information and the PDSCH are successfully received, and/or, the common beam information and the PDSCH are failed to receive.

In an implementation, the first bit resource information and the second bit resource information are different bit resource information.

In an implementation, the first bit resource information and the second bit resource information being different bit resource information represents that the common beam information is successfully received and the PDSCH is failed to receive.

With regard to the apparatus in the above embodiments, the specific way in which each module performs the operation has been described in the embodiments of the method and will not be elaborated here.

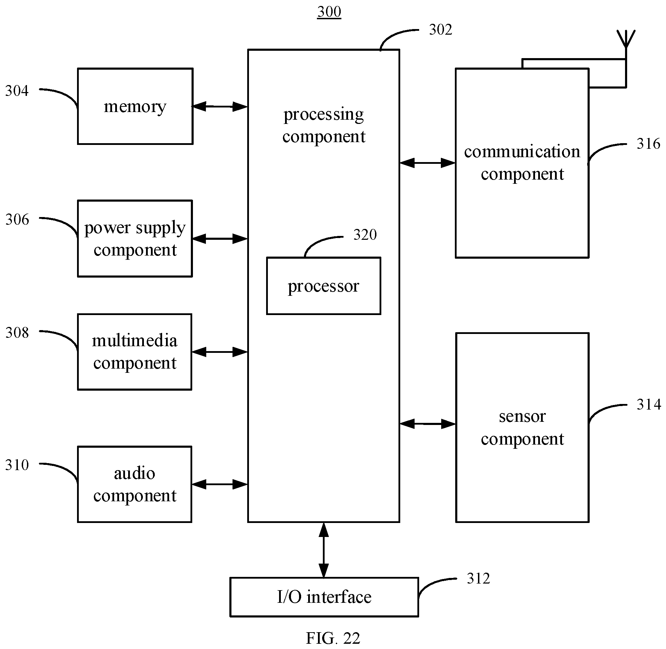

FIG. 22 is a block diagram illustrating a device 300 for feedback according to an exemplary embodiment. For example, the device 300 may be a mobile phone, a computer, a digital broadcasting terminal, a messaging device, a game console, a tablet device, a medical equipment, a fitness equipment, a personal digital assistant, etc.

As illustrated in FIG. 22, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and the relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on a communication standard, such as Wi-Fi, 2G or 3G, or their combination. In an exemplary embodiment, the communication component 316 receives broadcast signals or broadcast-related information from an external broadcast management system via a broadcast channel. In an exemplary embodiment, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an exemplary embodiment, the device 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an exemplary embodiment, a non-transitory computer readable storage medium is further provided which includes instructions, such as the memory 304 including instructions. The instructions may be executed by the processor 320 of the device 300 to complete the above methods. For example, the non-transitory computer-readable storage medium may be a ROM, a random-access memory (RAM), a CD-ROM, a magnetic tape, a floppy disk, an optical data storage device, etc.

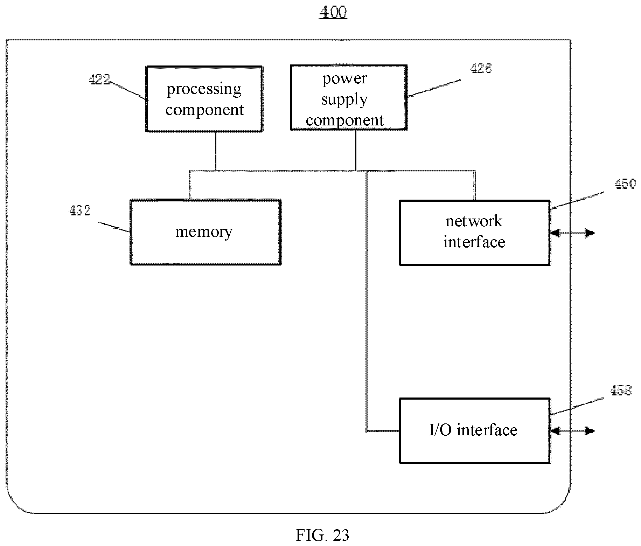

FIG. 23 is a block diagram illustrating a device for feedback according to an exemplary embodiment. For example, the device 400 may be provided as a network device. As illustrated in FIG. 23, the device 400 includes a processing component 422, which further includes one or more processors, and memory resources represented by a memory 432, which are configured to store instructions executable by the processing component 422, and for example, an application. The application stored in the memory 432 may include one or more modules each of which corresponds to a set of instructions. In addition, the processing component 422 is configured to execute instructions, to perform the above method.

The device 400 may further include one power supply component 426 configured to execute power management of the device 400, and one wired or wireless network interface 450 configured to connect the device 400 to a network, and one input/output(I/O) interface 458. The device 400 may operate an operating system stored in the memory 432, for example, Windows ServerTM, Mac OS XTM, UnixTM, LinuxTM, FreeBSDTM.

In an exemplary embodiment, a non-transitory computer-readable storage medium including instructions is further provided, for example, the memory 432 including instructions. The instructions may be executed by the processing component 422 of the device 400 to complete the above methods. For example, the non-transitory computer-readable storage medium may be a ROM, a random-access memory (RAM), a CD-ROM, a magnetic tape, a floppy disk, an optical data storage device, etc.

It may be further understood that "a plurality of' in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "/" generally means the contextual object is a kind of "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this present disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A feedback method, performed by a terminal, comprising:
receiving downlink control information configured to indicate common beam information;
determining whether the downlink control information is correctly received, and sending, to a network device, a feedback result for indicating whether the downlink control information is correctly received.

2. The method according to claim 1, wherein a negative acknowledgement response for the downlink control information is sent to the network device in response to the downlink control information being not correctly received.

3. The method according to claim 1, wherein a positive acknowledgement response for the downlink control information is sent to the network device in response to the downlink control information being correctly received.

4. The method according to claim 3, wherein sending the positive acknowledgment response for the downlink control information to the network device comprises:
sending the positive acknowledgment response for the downlink control information to the network device in response to the downlink control information being correctly received and a common beam indicated by the downlink control information being different from a beam currently used by the terminal.

5. The method according to claim 1, further comprising:
not sending a positive acknowledgment response for the downlink control information to the network device in response to the downlink control information being correctly received and a common beam indicated by the downlink control information being same as a beam currently used by the terminal.

6. The method according to any one of claims 1 to 5, wherein sending a positive acknowledgment response or a negative acknowledgement response for the downlink control information to the network device comprises:
sending the positive acknowledgment response or the negative acknowledgement response for the downlink control information to the network device based on first bit resource information;
wherein the first bit resource information is configured to indicate the positive acknowledgment response or the negative acknowledgement response for the downlink control information.

7. The method according to claim 6, wherein the first bit resource information comprises bit resource information in a hybrid automatic repeat request codebook, and the hybrid automatic repeat request codebook comprises a first type codebook and/or a second type codebook.

8. The method according to claim 7, wherein the bit resource information comprises a bit position, and the bit position is determined based on a bit position corresponding to one of:
a dynamic scheduling transport block;
a semi-persistent scheduling physical downlink shared channel;
a dynamic scheduling code block group;
a semi-persistent scheduling physical downlink shared channel release message; or
secondary cell dormancy information.

9. The method according to claim 4 or 5, wherein determining whether the common beam indicated by the downlink control information is the same as the beam currently used by the terminal comprises at least one of:
determining whether the common beam indicated by the downlink control information is the same as the beam currently used by the terminal based on the common beam indicated by the downlink control information and the beam currently used by the terminal; or
determining whether the common beam indicated by the downlink control information is the same as the beam currently used by the terminal based on the downlink control information, wherein the downlink control information is configured to indicate whether the common beam is a new beam.

10. The method according to claim 9, further comprising:
in response to the common beam indicated by the downlink control information being the same as the beam currently used by the terminal, and a beam for receiving a control resource set being different from the common beam, using the common beam after a first time upon receiving the downlink control information.

11. The method according to claim 9, further comprising:
in response to the common beam indicated by the downlink control information being different from the beam currently used by the terminal, using the common beam after a second time upon receiving the downlink control information or using the common beam after a third time upon sending the feedback result.

12. The method according to claim 6, wherein the downlink control information is further configured for scheduling of a physical downlink shared channel, PDSCH, and/or a physical uplink shared channel, PUSCH.

13. The method according to claim 12, wherein a positive acknowledgment response or a negative acknowledgement response of the PDSCH scheduled for the downlink control information is sent to the network device based on second bit resource information.

14. The method according to claim 13, wherein both the first bit resource information and the second bit resource information are same bit resource information.

15. The method according to claim 14, wherein both the first bit resource information and the second bit resource information are the same bit resource information in response to successfully receiving the common beam information and the PDSCH, and/or, both the first bit resource information and the second bit resource information are the same bit resource information in response to failing to receive the common beam information and the PDSCH.

16. The method according to claim 13, wherein the first bit resource information and the second bit resource information are different bit resource information.

17. The method according to claim 16, wherein the first bit resource information and the second bit resource information are different bit resource information in response to successfully receiving the common beam information and failing to receive the PDSCH.

18. A feedback method, performed by a network device, comprising:
sending downlink control information configured to indicate common beam information; and
receiving a feedback result for indicating whether the downlink control information is correctly received.

19. The method according to claim 18, wherein a negative acknowledgement response for the downlink control information is received, and the negative acknowledgement response represents that the downlink control information is not correctly received.

20. The method according to claim 18, wherein a positive acknowledgment response for the downlink control information is received, and the positive acknowledgment response represents that the downlink control information is correctly received.

21. The method according to claim 20, wherein receiving the positive acknowledgment response for the downlink control information comprises:
receiving the positive acknowledgment response for the downlink control information, wherein the positive acknowledgment response represents that the downlink control information is correctly received and a common beam indicated by the downlink control information is different from a beam currently used by the terminal.

22. The method according to any one of claims 18 to 21, wherein receiving a positive acknowledgment response or a negative acknowledgement response for the downlink control information comprises:
receiving the positive acknowledgment response or the negative acknowledgement response for the downlink control information based on first bit resource information;
wherein the first bit resource information is configured to indicate the positive acknowledgment response or the negative acknowledgement response for the downlink control information.

23. The method according to claim 22, wherein the first bit resource information comprises bit resource information in a hybrid automatic repeat request codebook, and the hybrid automatic repeat request codebook comprises a first type codebook and/or a second type codebook.

24. The method according to claim 23, wherein the bit resource information comprises a bit position, and the bit position is determined based on a bit position corresponding to one of:
a dynamic scheduling transport block;
a semi-persistent scheduling physical downlink shared channel;
a dynamic scheduling code block group;
a semi-persistent scheduling physical downlink shared channel release message; or
secondary cell dormancy information.

25. The method according to claim 18, wherein the downlink control information is configured to indicate whether the common beam is a new beam.

26. The method according to claim 22, wherein the downlink control information is further configured for scheduling of a physical downlink shared channel, PDSCH, and/or a physical uplink shared channel, PUSCH.

27. The method according to claim 26, wherein a positive acknowledgment response or a negative acknowledgement response of the PDSCH scheduled for the downlink control information is received based on second bit resource information.

28. The method according to claim 27, wherein both the first bit resource information and the second bit resource information are same bit resource information.

29. The method according to claim 28, wherein both the first bit resource information and the second bit resource information being the same bit resource information represents that the common beam information and the PDSCH are successfully received, and/or, the common beam information and the PDSCH are failed to receive.

30. The method according to claim 27, wherein the first bit resource information and the second bit resource information are different bit resource information.

31. The method according to claim 30, wherein the first bit resource information and the second bit resource information being different bit resource information represents that the common beam information is successfully received and the PDSCH is failed to receive.

32. A feedback apparatus, performed by a terminal, comprising:
a receiving unit, configured to receive downlink control information configured to indicate common beam information;
a processing unit, configured to determine whether the downlink control information is correctly received; and
a sending unit, configured to send, to a network device, a feedback result for indicating whether the downlink control information is correctly received.

33. A feedback apparatus, performed by a network device, comprising:
a sending unit, configured to send downlink control information configured to indicate common beam information; and
a receiving unit, configured to receive a feedback result for indicating whether the downlink control information is correctly received.

34. A feedback device, comprising:
a processor; and
a memory for storing instructions executable by the processor;
wherein the processor is configured to perform the feedback method of any one of claims 1 to 17 or perform the feedback method of any one of claims 18 to 31.

35. A storage medium stored with instructions, wherein when the instructions in the storage are executed by a processor of a terminal, the terminal is caused to perform the feedback method of any one of claims 1 to 17, or when the instructions in the storage medium are executed by a processor of a network device, the network device is caused to perform the method of any one of claims 18 to 31.
